Europäisches Patentamt

European Patent Office

Office européen des brevets

(11) Publication number: **0 070 145**
**A1**

(12) **EUROPEAN PATENT APPLICATION**

(21) Application number: **82303559.7**

(22) Date of filing: **07.07.82**

(51) Int. Cl.³: **B 23 D 29/00**

(30) Priority: **07.07.81 GB 8120917**

(43) Date of publication of application:
**19.01.83 Bulletin 83/3**

(84) Designated Contracting States:
**AT BE CH DE FR GB IT LI NL SE**

(71) Applicant: **ONAR HYDRAULIC LIMITED**
**Oriel House 43/44 North Hill**
**Colchester CO1 1PY(GB)**

(72) Inventor: **Middlemore, Lorraine**
**26 Elizabeth Road**
**Brentwood Essex(GB)**

(74) Representative: **Ford, Michael Frederick et al,**
**MEWBURN ELLIS & CO. 2/3 Cursitor Street**
**London EC4A 1BQ(GB)**

(54) **Portable power source and tools.**

(57) A portable power source uses low pressure fluid, notably compressed air, to generate hydraulic liquid pressure for driving a hydraulic tool. The power source has a reciprocating pump (16) and a reservoir (14) which has no air vent but instead has a movable wall (46) giving a chamber (45) of variable effective volume. This allows the power source to be used in various orientations.

Alternatively the power source can be incorporated into a hydraulic tool in which a double acting cylinder (12) opens and closes jaws (23/32, 34/260, 266) such as a cutter/spreader for use in rescue work.

EP 0 070 145 A1

./...

FIG.1

## PORTABLE POWER SOURCE AND TOOLS

The present invention relates to a portable power source and portable tools. It is envisaged that such tools could be used for cutting and for separating operations where a large force is required. The tools can also be used to effect a pulling action, by means of chains attached to the cutting or separating jaws, which are then closed. The primary use is in emergency rescue operations e.g. cutting open a crashed car to free trapped passengers, but there are many other uses, inter alia cutting steel cable.

Portable cutters for use in emergency rescue operations are known which have a hand held cutting head having a pair of jaws which are opened and closed hydraulically. To provide pressurised hydraulic liquid, petrol, electric and hand pumps have been used, connected by a line to the cutting head. To obtain sufficient pressure for heavy duty applications it is necessary for pumps of these types to be large. This usually means that the entire apparatus is too heavy to be carried by one man alone, so that the usual practice is for one man to carry the cutting head and another man to carry the pump. The use of such a two man team is unsatisfactory in many rescue operations. Alternatively the pump may not be carried about, and instead lines are employed to carry hydraulic liquid from the pump to the cutting head. However, lines carrying hydraulic oil become rigid under high pressure. They are unwieldy and limit the working range of a tool.

We have now appreciated that use of relatively low pressure fluid (usually air but possibly liquid or some other gas) as a power supply to generate high hydraulic pressure in situ can achieve greater portability. Lines carrying low pressure fluid are much more manageable than high pressure lines, and a cylinder of compressed air represents a self contained supply which can be carried on a man's back. A fireman's breathing apparatus can for example be used as a compressed air supply.

In one aspect then, this invention provides a portable hydraulic power source comprising pumping means for hydraulic liquid, a reservoir having a chamber for such liquid connected to the low pressure side of the pumping means, and conduits for delivery of pressurised hydraulic liquid from the pumping means, and return of liquid to the reservoir, the arrangement being such as to permit return of liquid simultaneously with delivery of pressurized liquid; the said reservoir chamber being of variable volume, and the chamber and all other hydraulic liquid spaces of the power source forming a sealed system apart from the said conduits for delivery and return of hydraulic liquid.

A difficulty can arise with a hydraulic system in that with a reservoir of fixed volume, the removal of liquid creates a partial vacuum in the reservoir and it becomes increasingly difficult to remove liquid. The standard method of overcoming this is to provide an air inlet to the reservoir. With such an arrangement there is always a risk that liquid may leak from the reservoir through the air inlet and this is a particular disadvantage with portable equipment which may have to be used in a variety of orientations.

A preferred arrangement of this invention utilises a reservoir which is a rigid vessel having a movable wall therein acted on by resilient biassing means which biasses the wall towards an opposite wall of the reservoir. The bias may be provided by a spring, the low pressure fluid which drives the pumping means or (for some applications) gravity. The movable wall applies a slight pressure to the liquid and the volume of the liquid chamber in the reservoir is reduced when liquid is removed.

The hydraulic power source can be used with separate hydraulic power tools. However, it can very advantageously be combined with the operative parts of a tool in a unitary structure.

In a second aspect, this invention therefore provides a portable tool comprising a unitary structure incorporating a hydraulic power source, a liquid valve and a piston-cylinder assembly connected to the conduits of the power source, plus driven parts connected to the unitary structure and arranged to be moved by the piston-cylinder assembly. The driven parts may in particular be a pair of jaws mechanically connected to the unitary structure and arranged to be opened or closed by the piston-cylinder assembly.

Two particularly useful arrangements are:

1)    two jaws each connected to the unitary structure by articulated links, and pivotally connected together and to the piston;

2)    one jaw fixed to the structure and the second pivotally connected to the structure or the other jaw at one point and to the piston at a second point.

The first arrangement is particularly suitable for a combined cutter/separator using a reciprocating piston whilst the second is suitable for cutting. One cutting blade, especially a fixed blade, may be shaped to cut in stages, making a tool suitable for cutting cable.

It is also possible to provide more than one pair of jaws. Thus a pair of jaws may be provided for cutting and separating the sheathing of a cable and a second pair be provided for cutting the cable itself.

The self contained nature of a tool such as this makes it useful for underwater applications, and indeed any environment, as well as applications on land.

The pumping means may be a reciprocating pump, and the low pressure fluid which powers it is preferably compressed air which is readily available in most rescues, and could for example be provided from cylinders carried on the back of the user of the tool.

To control the movement of the piston a valve system is needed and this may be a valve arrangement comprising a valve block containing a plurality of ports in a circular array, and connected as required by rotation of a cylindrical spool mounted over the array of ports. The spool has liquid passages extending through it between ports in the face of the spool which contacts the valve block. In the simplest arrangement there are four ports in the circular array, but a greater number of ports could be provided if the valve is to be used to contact additional functions.

The valve block may be housed within the casing of the tool, and connected in the hydraulic liquid paths between the reservoir, pump, and cylinder.

In use the spool serves to direct pressurised hydraulic liquid from the pump through a valve to the appropriate chamber of the cylinder. At the same time the spool directs liquid from the other chamber of the cylinder through another valve to the reservoir and/or the suction side of the pump. The selection of the appropriate directions for the flows of oil is accomplished by rotating the spool until its ports align with the ports on the valve block. The ports on the valve block are preferably provided with poppets which are urged into sealing contact with the spool by the oil pressure.

A movable wall in the reservoir (as mentioned above) may be biassed towards the opposite wall by means of the low pressure fluid. If so,a desirable safety feature which may be employed is to arrange that the supply of low pressure driving fluid (particularly if this is compressed air) enters the reservoir through a non-return valve which will block any accidental blowback of hydraulic liquid into this supply. For instance, if the tool was used with a low, and falling, pressure of air from an almost exhausted air bottle, a blowback might occur, contaminating valves and lines which might subsequently have to carry air at a higher pressure at which air and hydraulic oil are spontaneously explosive.

Another desirable safety feature is to use a compression spring to maintain a space between a movable wall in the reservoir and an end position of the wall's travel. Then accidental over-filling of the reservoir can be accommodated by movement of the wall into this space against the bias of this spring. Alternatively, or additionally the reservoir may be provided with a safety valve.

Embodiments of this invention will now be described with reference to the accompanying drawings, in which:

Figs. 1 and 2 are plan and side views of a cutting and spreading tool embodying the present invention, Fig. 1 being partly cut away and sectioned;

Fig. 3 shows alternative cutting jaws;

Fig. 4 shows yet another cutting head;

Fig. 5 is an enlarged view, mostly in section, of the reservoir, pump and valve block of the tool of Figs. 1 and 2;

Fig. 5a shows the valve spool in section on the line A-A of Fig. 5b;

Fig. 5b is a detail view showing the valve spool and a poppet in cross section on the line B-B of Fig. 5; and

Fig. 6 is a similar view to Fig. 5 showing an alternative reservoir and pump section.

8.

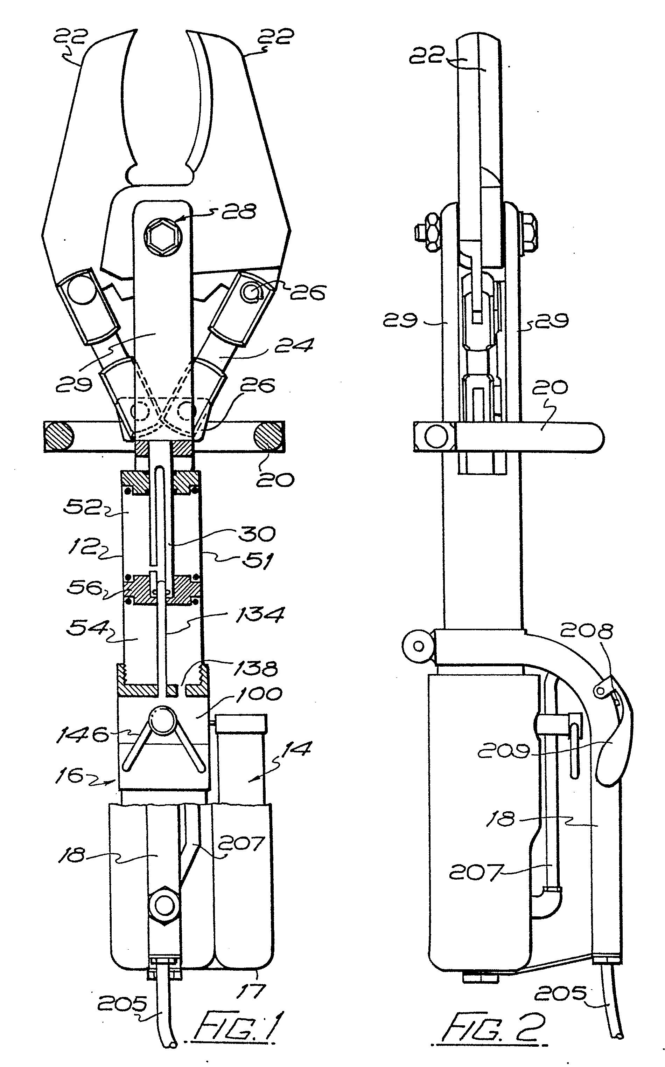

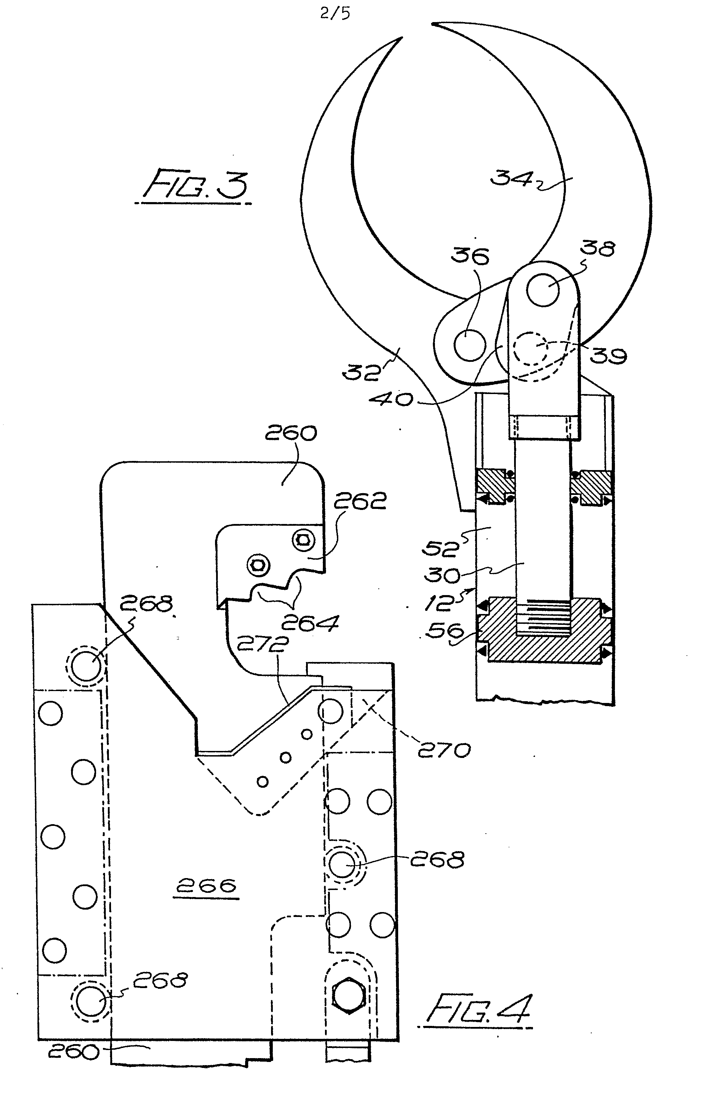

Referring first to Figs. 1 and 2, a tool for cutting and/or spreading is powered by compressed air as low pressure fluid which is used to generate a greater pressure of hydraulic liquid, i.e. hydraulic oil. The tool has a unitary operating structure, comprising three rigidly connected sections, namely a piston and cylinder section 12, a pump section 16 and a reservoir section 14 alongside the pump section. The reservoir and pump sections are covered by a common casing 17. Handles 18,20 are provided to facilitate carrying the tool. Cutting/spreading jaws 22 are connected onto the piston and cylinder section 12.

The piston and cylinder section 12 consists of a double-acting cylinder 51 containing a piston 56, fast with a piston rod 30 which in turn is fast with a piston head 25.

The jaws 22 are connected to the piston and cylinder section 12 by bars 24, opposite ends of which are connected by pivots 26 to the jaws 22 and to the piston head 25 respectively. The jaws 22 are connected together by boss 28 which is journalled in bars 29 connected to the outer casing of the piston and cylinder section 12. Movement of the piston rod 30 out of the cylinder 51 causes the jaws 22 to close. This achieves a cutting action. Similarly, movement of the piston rod 30

9.

into the cylinder 51 opens the jaws 22 in a spreading action. This may be used for lifting heavy objects e.g. fallen masonery.

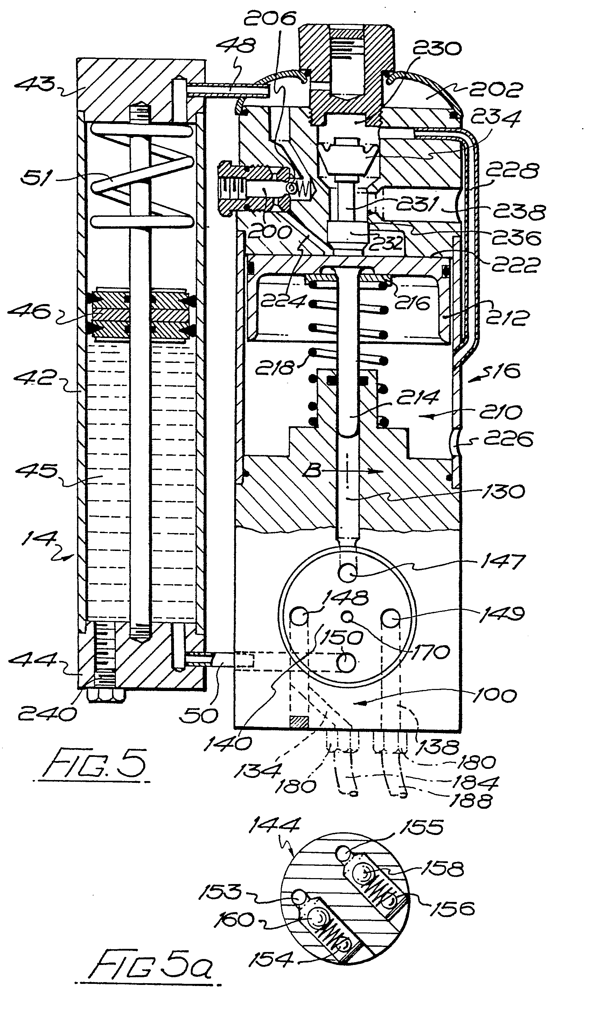

Various other working heads may be used with the same unitary structure of pump, reservoir and piston sections. One different configuration is shown by Fig. 3 which has a fixed jaw 32 fast with the piston and cylinder section 12 and a second jaw 34 connected to the first jaw by pivot 36. The piston rod 30 is connected to the second jaw 34 through a link 40 pivotally attached at 38 to the piston rod 30 and pivotally attached at 39 to the jaw 34. Movement of the piston 56 caused the second jaw 34 to pivot around the pivot 36, closing the jaws 32,34. The link 40 enables the movement of the piston rod to be kept substantially linear even though the point of attachment to the jaw 34 is eccentric relative to pivot 36.

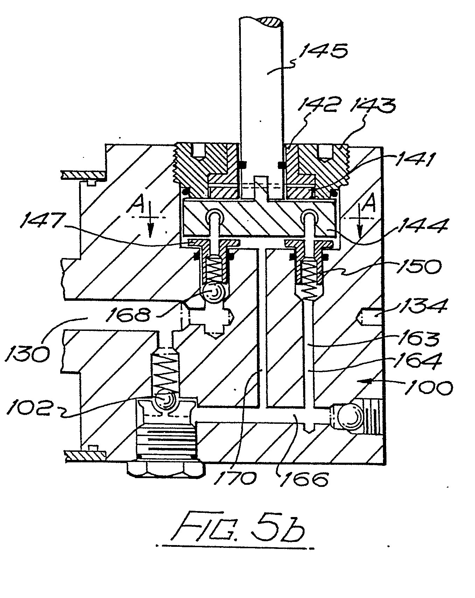

Fig. 4 shows a further cutting head. A fixed jaw 260 carries a blade 262 formed with indentations 264. A second jaw 266 slides along the fixed jaw on rollers 268 and carries a blade 270 with a straight edge 272. This co-operates with the curved indentations 264 to cut in stages, and this cutting head is suitable for cutting cable.

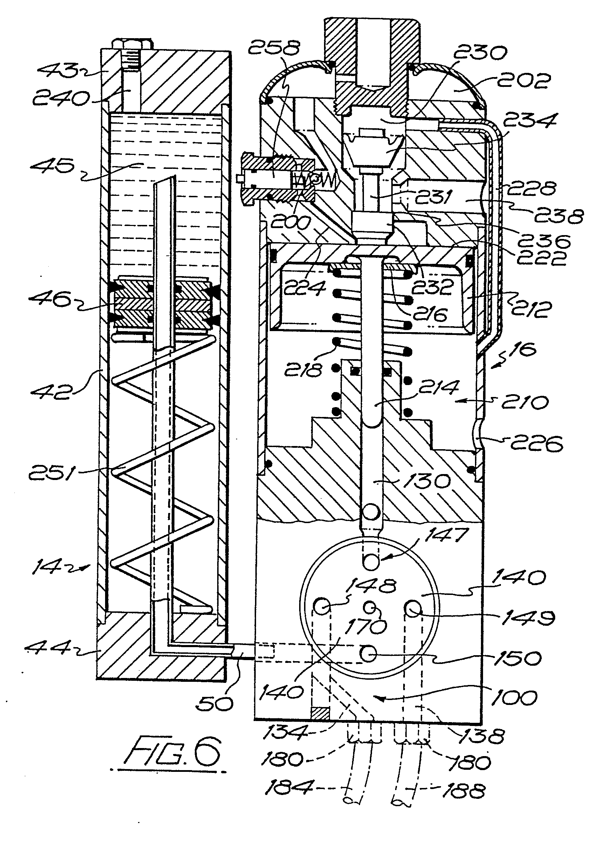

As shown in Fig. 5 the reservoir section 14 is formed by a cylinder 42 with end plugs 43,44. Within the tube 44 there is a movable wall in the form of a piston 46 guided on a fixed rod 47. The reservoir space 45 is bounded by the tube 42, the end plug 44 and the piston 46. In use compressed air delivered along the conduit 48 urges the piston 46 towards the end plug 44 and exerts an equal pressure on the fluid in the reservoir 45. A conduit 50 for hydraulic liquid connects the reservoir 45 with the pump section 16. Liquid from the reservoir 45 is therefore urged along the conduit 50 to the low pressure side of the pump under the influence of the pressure exerted through the piston 46.

A compression spring 51 is provided between the piston 46 and the end plug 43. The purpose of this compression spring is to keep the piston 46 at a minimum spacing from the end plug 43 as a safety feature to be explained hereafter.

When liquid is removed from conduit 50 during the suction stroke of the pump, the under-pressure in the reservoir 45 is compensated for by movement of the piston towards end plug 44 until equilibrium is restored. Similarly when liquid is returned to the reservoir the excess pressure is absorbed by movement of the piston 46 away from the end plug 44. There is therefore no need to provide the reservoir 45 with an air inlet (which would

11.

otherwise be needed to prevent underpressure developing in the reservoir). Thus the reservoir 45 is sealed apart from its inlet/outlet conduit 50.

After pressurisation, liquid from the pump passes through either conduit 134 or conduit 138 to one of the two chambers 52,54 into which the cylinder 51 is divided by the piston 56. If pressurised liquid is supplied through a conduit 134 to chamber 54, the piston rod 30 is moved out of the cylinder 51 causing the jaws 22 (Figs. 1 and 2) to close. To prevent excess pressure building up in the other chamber 52, liquid is drained from that chamber to the reservoir 45 and/or pump inlet via conduit 138. To open the jaws 22, chamber 52 is pressurised through conduit 138 whilst chamber 54 is drained through conduit 134.

To control the flow of liquid from the pump to one of the chambers, and to control the return of liquid from the other chamber to the reservoir 45 a valve system is required. This is provided at a valve block 100 at the end of the pump section 16. The conduit 50 from/to the reservoir 45 is connected to the valve block 100, through which it is connected to the pump.

The valve block 100 includes a circular face 140 where various pathways for hydraulic liquid terminate in four ports at which poppets 147-150 are provided. A

12.

cylindrical spool 144, which is shown in Figs. 5a and 5b faces the block's face 140. The spool runs on a bearing 141 between the spool and a packing piece 142 held by a retaining member 143. The spool 144 includes ports 153-156 which are positioned so that they can be brought into communication with the poppets 147-150. These are urged against the spool by the oil pressure in the valve block 100, except for poppets 150 which is pushed by a spring. Within the cylindrical spool 144 there are non-return valves 158, 160 which connect ports 153 and 154 and ports 155 and 156 respectively. The spool 144 can be turned by means of an operating handle 146 (Fig. 1) connected to the spool by shaft 145. The handle 146 and spool 144 can be turned 45° either way from a mid-position in which none of the ports 153-6 communicates with the poppets 147-150 and so no liquid can flow. The pump includes a chamber 130 formed in the valve block 100, in which a rod 214 reciprocates to suck in hydraulic liquid and drive it out under pressure. The conduit 50 from the reservoir is connected by an inclined bore 102 to a point 163 (Fig. 5b) part way along bore 164 which in one direction leads to the poppet 150 and in the other direction leads to a bore 166 (not shown in Fig. 5) which is connected through a non-return valve 102 to the chamber 130. The chamber 130 is connected to the poppet 147 through a non-return

13.

valve 168.

Flow through the valve is as follows. When the spool is turned to the position shown by Fig. 5a, the poppets 147 and 149 are connected through the valve 158 and the poppet 148 is connected with the poppet 150 through the non-return valve 160. During the pressure stroke of the pump, hydraulic liquid pressurised by the pump arrives at poppet 147 and flows through the non-return valve 158 to the duct 138. Low pressure liquid returning via the conduit 134 can pass through the non-return valve 160 into the duct 164 which is connected to the reservoir 45 and to the low pressure liquid side of the pump. The returning liquid flows to the reservoir 45, but is available to the pump at the next suction stroke, while any surplus or deficiency is allowed for by the reservoir 45. In this condition hydraulic liquid pressurised by the pump flows to the conduit 138 during the pressure stroke of the pump, while during a suction stroke the non-return valves 158,160 prevent undesired reverse flow of liquid. The non-return valve 168 is a further precaution against return flow during the suction stroke.

If the cylindrical spool 144 is turned 45° in the other direction from its mid-position the effect is to connect the poppet 147 through the non-return valve 160

14.

to the poppet 148 so that high pressure liquid can flow to conduit 134, while returning hydraulic liquid can flow from the conduit 138 through the non-return valve 158 to the poppet 150 and hence into the reservoir 45 via the bore 164. During operation, reversal of the movement of the jaws is determined by movement of the operating lever 146. The jaws can be stopped by placing the lever 146 and hence the spool 144 in the mid-position. Alternatively motion can be stopped at any point by shutting off the incoming supply of compressed air.

The spool cavity communicates with the reservoir via bore 170 allowing any high pressure liquid which may leak past the poppets into the cavity to escape to the reservoir.

The supply of compressed air is delivered along a hose 205 and led in through the operating handle 18. A valve 208, controlling the admission of air, is located in this handle, and is operated by lever 209 on the handle 18 in a "dead-man's-handle" configuration so that the pump can run only when the lever 209 is gripped by the operator.

Air admitted through the valve 208 is delivered to an inlet 200 to the pump section via a conduit 207.

As can be seen from Fig. 4, the pump is generally similar to that shown in U.K Patent Specification

15.

1288180.

The air inlet to the pump section 16 is at 200. This inlet communicates directly with a bore 224, and communicates via a non-return valve 206, with a chamber 202 at one end of the pump section 16, from which the conduit 48 leads to the reservoir section.

The pump section has a pump chamber 210, in which is located a piston 212 and a piston rod 214. One end of the piston rod 214 is received in a conduit 130 of the block 100 at the end of the pump section, whilst the other end is secured to a washer 216. A spring 218 extends between an abutment surface 220 of the valve block 100 and the washer 216 to force the piston rod 214 out of the conduit 130 and maintain the washer 216 in contact with the piston 212. The force thus exerted on piston 214 biases it into abutment with surface 222.

When air is admitted via valve 208 and inlet 200 it passes through bore 224 to the pump chamber 210 as well as through bore 48 to bias piston 46. The pressure forces the piston 212 away from surface 222, compressing the spring 218 and forcing the piston rod 214 down conduit 130. This is the compression stroke of the pump, which forces fluid from conduit 130 through to the poppet 147. Excess air from the pump chamber 210 escapes through hole 226.

16.

When the piston 212 has moved its full stroke, conduit 228 communicates with the high pressure side of the pump chamber 210 so that compressed air passes through conduit 228 into a bore 230.

Bore 230 contains a valve body 231 having a head 232 and a resilient collar 234 at opposite ends. The head 232 normally abuts against a seat 236 thereby sealing bore 230 from pump chamber 210. However, when compressed air enters bore 230 the pressure of the air on the collar 234 forces the valve body 231 to move in the bore 230 towards the piston 212. The valve head 232 is lifted from its seat 236 and in doing so it blocks bore 224 so that no more compressed air is delivered to the pump chamber 210 and at the same time establishes communication between the pump chamber and a part of the bore 230 which communicates with the atmosphere through opening 238 and hence the air pressure in the pump chamber 210 is reduced.

The spring 218 then forces the piston 212 towards surface 222. The piston rod 214 moves outwardly in the conduit 130 of the valve block. This is the suction stroke of the pump in which fluid is drawn from the reservoir 45 through non-return valve 102 and into conduit 130.

As the piston 212 moves towards surface 222 it

17.

contacts the valve head 232 and moves the valve body 231 back into the bore 230. This re-opens conduit 224, and contact between the valve head 232 and its seat 236 reseals the bore 238 from the pump chamber 210. This cycle continues for as long as compressed air is admitted through valve 208 to inlet 200, and the hydraulic liquid pressurised by the pump is able to flow out through one or other of the conduits 134,138.

The pump generates a hydraulic pressure which is greater than the incoming air pressure by a factor which depends on the ratio of the cross-sectional areas of the rod 214 and piston 212.

These are preferably arranged to multiply the pressure more than sixety times, and typically they will multiply it eighty or one hundred times to give a high hydraulic pressure. A fireman's breathing apparatus - which may be used as a source of compressed air in rescue work - delivers around 7 bar above the ambient pressure. The cross-section areas are preferably chosen to give a liquid pressure in excess of 6oo bar.

The reservoir 45 can be filled through a filling opening 240 which is normally close by means of a plug. The reservoir is provided with a safety valve (not shown) in the end cap 44 but the compression spring 51 provides a further safety feature. Because the piston rod 30

18.

extends through the chamber 52, the filled volume of chamber 52 is less than the filled volume of chamber 54. In consequence, the volume of oil in the reservoir 45 varies as the tool is operated. If the reservoir 45 were to be filled at a time when the maximum quantity of oil was contained in the piston and cylinder section 12, then subsequent operation of the tool would drive further oil into an already filled reservoir. However, because the compression spring 51 maintained a void space at one end of the reservoir section 14 during filling, this over filling of the reservoir 45 can be taken up by compression of the spring 51. The void space whose existence is normally maintained by the spring 51 is dimensioned so that compression of the spring 51 can accommodate any overfilling of the reservoir 45.

The non-return valve 206 is a further safety feature. The apparatus described, of course, does not bring air and hydraulic liquid directly into contact. However, it is conceivable that the failure of seals within the apparatus could bring hydraulic liquid from the reservoir into an air space. The non-return valve 206 prevents any such leaked oil from being forced back into the line through which air to operate the apparatus is supplied.

The apparatus described is a complete tool.

However, it will be appreciated that the pump and reservoir sections as illustrated in Fig. 5 could be used on their own as a portable hydraulic power source for converting relatively low pressure driving fluid such as compressed air to high pressure hydraulic liquid deliverable at will along either of the conduits 134,138. The parts of the conduits within the valve block 100 would be terminated at hose connectors 180, shown in phantom, and high-pressure hydraulic hoses 184,188 would be attached to these and would lead to a separate tool.

If the tool had its own control valve for hydraulic liquid, the valve spool 144 would be left turned to pump along one hose, and the valve on the tool used to control it. Alternatively, the valve spool 144 could be used to give remote control of the operation of a tool, for example a tool manouvered into its position of use by means of remote handling equipment.

Fig. 6 shows a reservoir and pump which differs slightly from those shown in Fig. 5. Only the differences will be mentioned.

The reservoir piston 46 is not biassed with air 48. Instead a spring 251 is used, which is long enough to maintain pressure on the hydraulic liquid at all times. This liquid flows in and out through a central tube 253, which acts as a guide for the piston.

20.

Air is admitted to the pump section through a connection 255 at its end, which leads directly to space 202 (and which was blocked off in Fig. 5). The delivery of air down bore 224 is controlled by a control lever (not shown) arranged to press mechanically on plunger 258 which in turn unseats the valve 206. This control lever can be arranged as a "dead-man's-handle" which requires the operator's grip on it to hold the plunger 258 pressed in.

Compressed air often contains water, and the chamber 202 acts to collect any sizeable drops of water delivered with the air. It then is removed in small amounts by evaporation into the flow of air.

The reservoir and pump of Fig. 6 could be used in a complete tool, as illustrated by Figs. 1 to 3. Alternatively it could be fitted with hose connectors 180, as shown in phantom, and used as a separate source of hydraulic power, as described in connection with Fig.5.

CLAIMS:

1.    A portable hydraulic power source comprising pumping means for hydraulic liquid, a reservoir having a chamber for such liquid connected to the low pressure side of the pumping means, and conduits for delivery of pressurised hydraulic liquid from the pumping means, and return of liquid to the reservoir, the arrangement being such as to permit return of liquid simultaneously with delivery of pressurized liquid;

the said reservoir chamber being of variable volume, and the chamber and all other hydraulic liquid spaces of the power source forming a sealed system apart from the said conduits for delivery and return of hydraulic liquid.

2.    A power source according to claim 1 wherein the reservoir is a rigid vessel having a movable wall therein acted on by resilient biassing means which biasses the movable wall towards an opposite wall of the reservoir.

3.    A power source according to claim 2 wherein the reservoir contains a spring biassing the movable wall a minimum distance towards the opposite wall, whereby over-filling of the reservoir can be accommodated by movement of the wall against the spring.

4.    A power source according to any one of the preceding claims wherein the pumping means is a reciprocating pump provided with valve means which cause the operating stroke of the pump to repeat automatically, the pump being powered by compressed air or other relatively low pressure fluid, and delivering hydraulic liquid at a greater pressure than that of the low pressure fluid.

5.    A power source according to any one of the preceding claims further comprising a liquid valve controlling delivery of hydraulic liquid to either one of the said conduits and simultaneous return flow to the reservoir from the other of them, which valve has an operating member movable to connect the pumping means with either conduit and simultaneously to connect the other conduit with the reservoir.

6.    A power source according to claim 5 wherein the liquid valve has a block having a face with at least four ports distributed around a circle on the said face and respectively connected to the pumping means, the reservoir and each of the said conduits, the said operating member being a cylindrical spool having a face in contact with the said ports, that said face of the cylindrical spool also having ports therein positioned to be aligned with the ports of the block, the spool incorporating at least two non-return valves each connecting a respective pair of the spool's ports.

7.     A portable tool comprising

a unitary structure incorporating a hydraulic power source according to any one of the preceding claim a piston-cylinder assembly connected to the said conduits, and a liquid valve controlling delivery of hydraulic liquid from the pumping means to the piston-cylinder assembly, and

driven parts connected to the unitary structure and arranged to be moved by the piston-cylinder assembly,

8.     A portable tool according to claim 7 wherein the piston-cylinder assembly is double acting with the chambers of its cylinder connected to respective ones of the said conduits, to be supplied with hydraulic liquid, from the pumping means under control of the liquid valve, which valve is selectively operable to deliver liquid from the pumping means to either the conduit and hence to

24.

the cylinder chamber connected thereto, while simultaneously connecting the other conduit to the reservoir.

9. A portable tool according to claim 7 or claim 8 wherein the driven parts are a pair of jaws connected to the unitary structure and arranged to be opened or closed by operation of the double acting piston-cylinder assembly.

10. A portable tool according to any one of claims 7 to 9 wherein the pumping means comprises a liquid chamber and means to drive a piston into the chamber to drive out liquid under pressure, and wherein the liquid valve is provided at a valve block which incorporates this liquid chamber.

FIG.1

FIG.2

**FIG.3**

34

36

38

32

39

40

52

30

12

56

260

262

264

268

272

266

270

268

268

260

**FIG.4**

FIG.5

FIG 5a

0070145

FIG. 5b

FIG.6

## DOCUMENTS CONSIDERED TO BE RELEVANT

| Category | Citation of document with indication. where appropriate, of relevant passages | Relevant to claim | CLASSIFICATION OF THE APPLICATION (Int. Cl. ³) |
|---|---|---|---|
| X | US-A-3 948 051 (MARSHALL)<br><br>*The whole document* | 1,2,4, 5,7-10 | B 23 D 29/00 |
| X | US-A-4 011 724 (LANDES)<br><br>*The whole document* | 1,2,4, 5,7-10 | |
| X | FR-A-2 384 977 (STOREN-UND MASCHINENFABRIK EMIL SCHENKER)<br>*The whole document* | 1,2,4, 7,9 | |
| X | WO-A-7 900 986 (GRULLMEIER)<br><br>*The whole document* | 1-4,7, 9 | |
| X | US-A-3 837 076 (GOOD)<br>*The whole document* | 6 | |

--- --- ---

| | | | **TECHNICAL FIELDS SEARCHED (Int. Cl. ³)** |
|---|---|---|---|
| | | | B 23 D<br>B 25 B<br>F 15 B |

The present search report has been drawn up for all claims

| Place of search | Date of completion of the search | Examiner |
|---|---|---|
| THE HAGUE | 30-09-1982 | BERGHMANS H.F. |